Europäisches Patentamt

European Patent Office

Office européen des brevets

(19)

(11) Publication number: **0 317 538**
**A1**

(12) # EUROPEAN PATENT APPLICATION

(21) Application number: **88850388.5**

(22) Date of filing: **10.11.88**

(51) Int. Cl.⁴: **F 16 L 33/02**

(30) Priority: **11.11.87 SE 8704403**

(43) Date of publication of application:
**24.05.89 Bulletin 89/21**

(84) Designated Contracting States:
**AT BE CH DE ES FR GB GR IT LI LU NL SE**

(71) Applicant: **ANDERSTORPS WERKSTADS AKTIEBOLAG**
**Box 100**
**S-334 00 Anderstorp (SE)**

(72) Inventor: **Johansson, Jan-Olof**
**Box 100**
**S-334 00 Anderstorp (SE)**

**Karlsson, Evert**
**Box 100**
**S-334 00 Anderstorp (SE)**

(74) Representative: **Adéll, Bengt-Ingvar**
**Bellevuegatan 5 B**
**S-552 62 Jönköping (SE)**

(54) **Hose clamp.**

(57) In an elastic cylindrical hose clamp consisting of a rectangular and uniformally thick resilient plate (1) having a first gripping lug (4) protruding centrally from one side (2) of the plate (1) and two gripping lugs (5) protruding from the opposite side (3) of the plate (1) at each their own side of the first lug (4), said lugs (4) (5) at their free ends having radially outwards protruding tongues (6) (7) to be used when expanding the clamp, the tongue (6) of the first lug (4) being so designed as to engage and travel along the track (8) defined between said second lugs (5), the amendment that said three lugs (4) (5) are designed broader adjacent to the rectangular plate (1) than at their free ends (6) (7).

FIG.1.

## Description

## HOSE CLAMP.

The present invention relates to hose clamps and more particularly, to an improvement in a hose clamp formed of an elastic flat material.

The US patent No. 4 380 096 describes and shows as prior art a conventional hose clamp having an annular clamping portion consisting of an elastic rectangular plate with constant width, a first gripping end portion or lug and a pair of second gripping end portions or lugs at each their own side of said first lug and designed to expand the diameter of the clamping portion by means of tongues protruding radially from the ends of the three lugs.

However, such a hose clamp is not constructed to accurately considering the bending moment and other forces or stresses produced at the respective positons on the clamping portion owing to the clamping force of the gripping end portions or lugs and specially to the bending force on said lugs at their base portions adjacent to the rectangular plate.

A primary object of the invention is to provide a hose clamp taking in consideration the effect of said bending forces.

According to one respect of this invention, there is provided an improved hose clamp having an in the main rectangular and uniformly thick resilient plate, a first gripping lug protruding centrally from one side of the plate and two second gripping lugs protruding from the opposite side of the plate at each their own side of the first lug, the ends of the lugs having a radially outwards protruding tongue to use when expanding the clamp, the tongue of the first lug being so designed as to engage and travel along the track defined between said second lugs, whereby said three lugs being broader at their bases adjacent to the rectangular plate than their free ends.

According to another respect of the invention the peripherical extension of said resilient lugs dominate over the peripherical extension of said rectangular plate.

According to a further respect of the invention there is pro vided a hose clamp of the above mentioned kind, at which the ends of said second lugs being connected by a transverse strip.

The foregoing and other objects and features of the invention will be appearent from the detailed description below and the accompanying drawings, in which:

FIG. 1 is a perspective view of one embodiment of a hose clamp constructed according to this invention;

FIG. 2 is a side view of the hose clamp

FIG. 3 is a plane view of a sheet material before its forming to a hose clamp; and

FIGs 4 to 6 are views corresponding to FIGs. 1 to 3 respectivly of another embodiment of a hose clamp according to the invention.

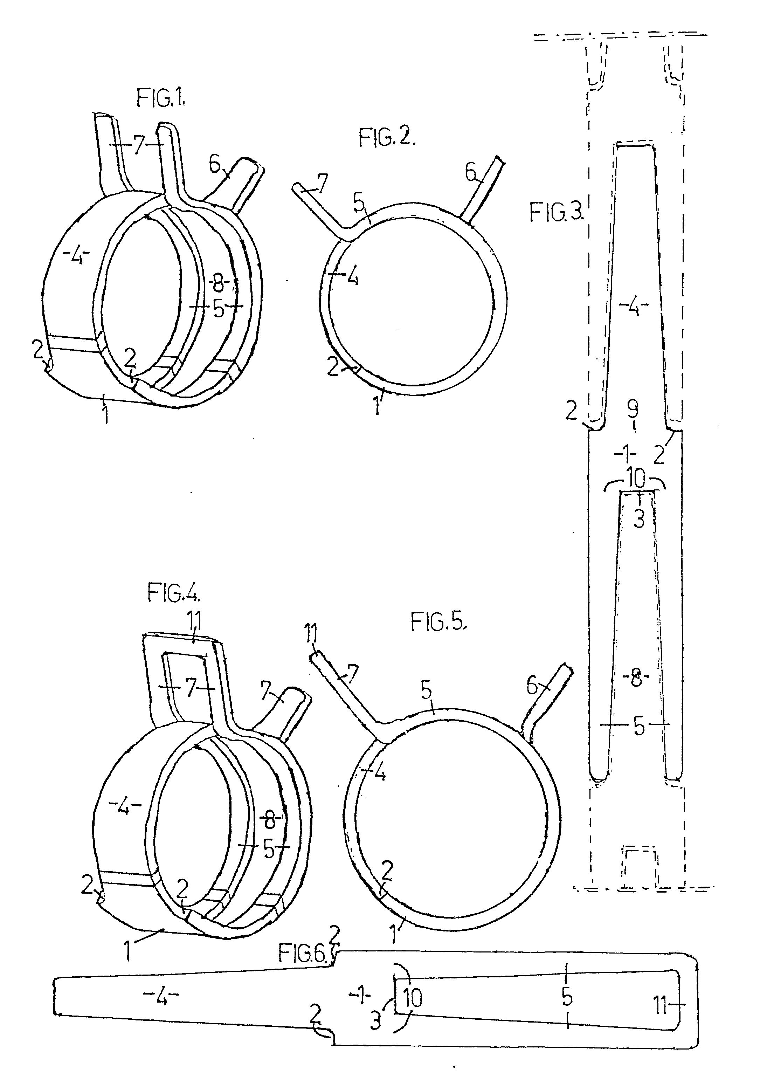

Referring now to the drawing and particularly to FIGs. 1 to 3, one preferred embodiment as shown therein consists of an in the main rectangular and uniformly thick resilient plate 1. From opposite sides 2 and 3 of the plate protrude gripping lugs 4 and 5 respectively, which are bended in an annular shape to be able to grip a hose or similar. Thus a first lug 4 protrudes centrally from one side 2 of the rectangular plate and two second gripping lugs 5 protrude from the opposite side 3 of the plate and on each their own side of the first lug 4. Said three lugs have radially outwards protruding tongues 6 and 7 respectively to be used when expanding the clamp at its fixing on a hose not shown. Hereby the tongue 6 of the first lug 4 is so designed as to engage and travel along the track 8 defined between said second lugs 5.

According to the invention said three lugs 4 and 5 are broader at their bases 9 and 10 respectively adjacent to the rectangular plate 1 than at their free ends. This circumstance gives the three lugs a stronger attachment to the rectangular plate. Further this gives the three lugs a shape tapering towards their free ends. Furthermore said tapering shape will contribute to the desirable distribution of the different stresses as produced at different positions along the periphery of the clamp.

By the hose clamp as shown the peripherical extension of the three lugs 4 and 5 dominate over the peripherical extension of the rectangular plate 1 and this will cooperate to the favourable distribution of the different stresses due to the tapering shapes of the lugs.

Raw material for hose clamps as shown in FIGs. 1 to 3 can be punched one after another from a steel band without noticeable loss of material. This is illustrated in FIG. 3, in which with continuous lines the raw material for one hose clamp is indicated and with short dashed lines raw material for hose clamps situated before and after last mentioned hose clamp. From FIG. 3 one can learn that in the march of hose clamps as punched out from a steel band the lugs 4 fits in the tracks 8 as defined by the lugs 5 of a foregoing or following hose clamp.

The embodiment of the hose clamp as shown in FIGs. 4 to 6 has been provided in order to facilitate the approaching of the tongues 6 and 7 to each other when expanding the hose clamp. This is acchieved by a transverse strip 11, which connects the ends of the tongues 7 of the second lugs 5. The manufacture of clamps of this more comfortable kind necessitates a certion loss of plate material due to the fact that the strib makes it impossible to place the lug 4 between the lugs 5 of an adjacent hose clamp, when punching raw materials to the hose clamps.

## Claims

1. In a cylindrical hose clamp having an in the main rectangular and uniformly thick resilient plate, a first gripping lug protruding centrally from one side of the plate and two second gripping lugs protruding from the opposite side of the plate at each its own side of the first lug, the ends of the lugs having a radially protruding tongue to use when expanding the clamp, the tongue of the first lug being so designed as to engage and travel along the track defined between said second lugs, the improvement that said three lugs are broader adjacent their bases in the rectangular plate than at their free ends.

2. In a hose clamp as in claim 1, by which the peripherical extension of said resilient lugs dominate over the peripherical extension of said rectangular plate.

3. In a hose clamp as in a claim 1, by which the free ends of the tongues of said second lugs being connected by a transverse strip.

4. In a hose clamp as in claim 1 said first lug being so designed as to fit in the track between said second lugs of a follo wing hose clamp when punching clamps from a band.

EP 0 317 538 A1

FIG.1.

FIG.2.

FIG.3.

FIG.4.

FIG.5.

FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 303 456 (HORCHER) <br> * Figures; page 4, lines 1-20 * | 1,3 | F 16 L 33/02 |
| A,D | US-A-4 380 096 (NISHIDA et al.) <br> * Figures 1,4-6 * | 1,2 | |
| A | GB-A-2 087 468 (K.K. KAISHA TAIYO HATSUJYO SEISAKUSHO) <br> * Figures 13,14 * | 1,3 | |
| A | US-A-4 305 179 (SAKURADA) <br> * Figures 1,2 * | 1,4 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 27-01-1989 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)